# EUROPEAN PATENT APPLICATION

(11) **EP 1 947 759 A2**
(43) Date of publication of application: **23.07.2008**
(21) Application number: 06804904.8
(22) Date of filing: 10.10.2006
(51) Int. Cl.: H02K 21/00

(54) **AN STARTING AND GENERATING MULTIPLYING CONTROL SYSTEM, AND A METHOD FOR USING THE SYSTEM, AND AN ELECTROMOTION MIXED DYNAMIC VEHICLE WHICH USES THE SYSTEM AND THE METHOD**

(30) Priority: 10.10.2005 CN 200510113059
(71) Applicant: He, Lei, Lanzhou City 730010, P.R. (CN)
(72) Inventor: He, Lei, Lanzhou City 730010, P.R. (CN)
(74) Representative: von Hellfeld, Axel
(86) International application number: PCT/CN2006/002647
(87) International publication number: WO 2007/041948

(57) **Abstract**

A starting and generating multiplying control system and a method for using the system. The system comprises a motor drive controller, a motor and a magneto-electric change-over switch. The motor comprises a starting winding and a motor assistant winding. Both outputs of the starting winding and the motor assistant winding are connected with the motro drive controller through the magneto-electric change-over switch respectively. When the magneto-electric change-over switch turns on the starting winding and the motor drive controller, the start winding makes the motor started. After exceeding the rated speed, the magneto-electric change-over switch turns on the motor assistant winding and the motor drive controller, the motor assistant winding generates motor assistant. And an electromotion mixed dynamic vehicle uses the above system and method.

## Description

### TECHNICAL FIELD

The invention relates to the field of electromotion mixed dynamic vehicle; especially the motor drive and generation control tech in electromotion mixed dynamic vehicle, particularly in the electric/generating multiplex controlling technology.

### BACKGROUND OF THE INVENTION

In recent years, in order to alleviate the tension of energy and worsening environment in mobile area, the study of new electromotion mixed dynamic vehicle of "energy-saving", "environmental protection" has become a must trend. The so-called "hybrid electric ", is the multiplex of electric and other engines: when the mobile stars / speeds up, it will use the permanent magnet synchronous motor /excitation motor as the multiplex motor to achieve the multiplex function of starting/ electric power-assist; when the vehicle is slowing down or running normally, the permanent magnet synchronous motor /excitation motor will be used as the generator to achieve the energy feedback and charge the battery.

The conversion of starting, electric power-assist and generating operating status needs a series of drive controlling technology to achieve, and there are many new problems and tech difficulties in achieving the drive controlling technology and hybrid mobile developing process.

For example: when the mobile starts in a low speed and high-speed power-assist according to automobile operating mode need, it needs a relatively higher electric torque, but the design theory of permanent magnetic motor limits the synchronous achievement of the low-speed starting the high torque and high-speed power-assisted the high torque. For example, under the same condition, the permanent magnetic motor at the rated speed of 800r/min, its starting speed is much larger than the rated speed of 3000r/min, but it can not reach the high-speed power-assist due to its highest speed limit by the starting winding back electromotive force; the torque of the permanent motor designed as the rated speed of 3000r/min is very small though it has a high torque power-assist in the high speed area. In other words, the permanent magnetic motor, which is designed as the low-speed starting requirement, can not satisfy the functional need of power-assist in the high-speed area; while the permanent magnetic motor designed as the high-speed power-assist function can not satisfy the need of the low-speed starting performance; and the contradiction between them can not be negotiated.

For example: Nearly all the current low voltage/generating multiplex controlling tech adopts to the lower tube voltage-drop of MOSFET device or model to achieve the low voltage permanent magnetic brushless motor drive control. While the function of MOSFET power device is low voltage of heavy-current tube or model, for example: the working voltage of the power tube or model with 200A~600A is usually 150V, but the maximum working currency of 300V~600V tube or model is merely tens of ampere. Therefore, in the low-voltage /generating multiplex controlling system, it can only adopts to the heavy-current MOSFET tube or model. Then after the finish of the mobile electric working status, the engine can go into the generating condition naturally; and no matter if there is load or not in the generation output, the back electromotive power-assist will rise as the speeding up, which will lead to a higher back electromotive power-assist in the electric winding, and the back electromotive power-assist produced by it will be much higher than the normal voltage of the MOSFET tube or model. Taking the example of mobile 42V electric/ generating multiplex apparatus system: 42V refers to the charging voltage in motor is 42VDC, the battery voltage adopted is safe voltage of 36V; the back electromotive power-assist of electric winding of the permanent synchronous motor designed as voltage of 36V, rating speed of 800r/min is nearly 36V when working; however ,the back electromotive power-assist of the one of 800r/min can achieve more than 200 V under 6500r/min, which is much higher than the normal working voltage of MOSFET tube or model, damaging the MOSFET tube or model directly. So currently, in order to avoid the problems of the permanent magnetic 42V electric/generating multiplex apparatus system, many mobile producers, both in and out of China, still adopts to the excitation magnetic 42V electric/generating and its control system, though its torque and efficiency is inferior to the one in permanent magnetic synchronous motor.

Moreover, there will be two batteries and generating charging system in vehicle, no matter adopting to the high voltage or low voltage hybrid system; take the above 42V system for example, it comprises the two batteries of 12V, 36V and two generating charging systems of 14V and 42V Currently, the implementation of two batteries and generating charging system in most mobile companies adopts to this method: adopting to one generating and charging system to provide one kind of battery charging and /or loading electricity directly; to the generating charging system, it will use DC-DC to boost or drop the voltage, providing battery charging of another voltage and/or loading electricity. This method costs much and is low efficiency; especially for the DC-DC of high power, low voltage; and the controlling system of DC-DC has a tough tech problem, its designing cost is nearly one brushless permanent magnetic motor drive controlling system.

According to the tech difficulties above, nowadays, most of the various mobile companies adopts to the high-voltage hybrid system, that is a higher voltage battery, and the higher tube voltage, larger currency IGBT model to realize the motor drive control system, as well as adopt the permanent synchronous brushless sine wave motor and its weak magnetic drive controlling system; the weak magnetic drive controlling system, which adopts the weak magnetic way, can not only run the high torque in a low-speed starting, but also achieve the electric high-speed power-assist of the motor; accordingly, when the stator winding is stated in d axis, the weak magnetic controlling principle is to add the currency to generate the homo-polarity magnetic fields from stator field and relative rotator permanent magnetic, which will reduce the strength of the rotator permanent magnetic to achieve the goal of increasing the speed and control the output. However, the weak magnetic controlling is inclined to generate the electric rotator permanent demagnetization, and the requirement for circuit design is very high. Once there is something wrong with the circuit, the back electromotive power-assist will set all the controlling system on fire; and the motor will always exist the current input of weak magnetic, the temperature in motor will rise and be hot, which not only consume the energy, but also has the disadvantages of low efficiency, lots of problems, drop output torque, etc..

### SUMMARY OF THE INVENTION

In order to solve the problems above, the aim of the invention is to provide one kind of electric generating multiplex controlling system and method, which can make the hybrid engine achieve the low-speed the high torque starting and high-speed the high torque electric power-assist without the weak magnetic controlling, and at the same time fulfill the simple and direct voltage regulation and charging system.

Another aim of the invention is to provide the electromotion mixed dynamic vehicle which adopt the electric generating multiplex controlling system and method.

To achieve the goal, the first tech scheme in this invention is to provide one kind of electric generating multiplex controlling system. The controlling system comprises: motor drive controller, containing the starting winding and the motor assistant winding motor, and the magneto electric switch, which is used in exchanging of working status between the low-speed starting and high-speed electric power-assist.

The output connections in the starting winding and motor assistant winding connects the upper contact and the lower contact in the magneto electric switch separately.

The three-phase AC output in the motor drive controller connects the dynamic contacts in the magneto electric switch separately.

The starting winding and the motor power-assist winding can be the star contact or the angular connection; and it can be designed through the tap of the winding in one motor or separately establish, or it can be designed separately by the windings in two motors.

The magneto electric switch can be unidirectional or bidirectional.

The profile of motor drive controller, starting winding and the motor power-assist winding mentioned can be trapezoidal wave or sine wave.

Preferably, the motor electric generating multiplex controlling system also comprises the high-voltage rectifier chopper regulating circuit and the low-voltage rectifier chopper regulating circuit.

The three-phase input terminal of the high-voltage rectifier chopper regulating circuit connects with the one in the output terminal of the starting winding, which being used to transform the three-phase exchanging voltage in the starting winding into the direct voltage, in order to provide for the high-voltage power source/battery charging and /or loading electricity, or to exchange the three-phase exchanging voltage into the direct voltage to supply for the low-voltage power source/battery charging/load electricity.

The three-phase AC input terminal of low-voltage rectifier chopper regulating circuit connects with the one in output terminal of the starting winding, which being used to transform the three-phase exchanging voltage in the starting winding into the direct voltage.

At the same time, the electric generating multiplex controlling system as well as comprises the generating winding. And it links in-phase with the starting winding and motor assistant winding, or with the independent winding; and the three-phase output terminal in the generating winding connects with the three-phase input contact of the high-voltage rectifier chopper regulating circuit; when the direct voltage of high-voltage rectifier chopper regulating is lower than the one in high-voltage power /battery charging voltage, the generating winding is used to increase the direct voltage to the charging voltage.

Besides, the invention designs a simple ,useful and good heat-dissipation shell for the motor drive controller: the outer shell has an effusion groove inside, which equips a heat-dissipating liquid with high heat ratio, and the encapsulation cover plate of heat-dissipating liquid connects with the outer seal, the controller lies on the encapsulation cover plate.

Preferably, the outer shell equips a hole connecting with the effusion groove; meanwhile, the outside wall of the outer shell and the inside wall of the effusion groove has the cooling fin.

To achieve the goals above, the second design scheme is to provide an electric generating multiplex controlling method. The controlling method is applied to the electric generating multiplex controlling system above, including:

It will connect the magneto electric switch with the motor drive controller. When the motor drive controller works, it will drive the starting winding to run the hybrid mobile generator.

When the generator runs to the rated speed, it will cut down the starting winding and the motor drive controller, and connect the motor assistant winding with the motor drive controller, drive its motor assistant winding to power-assist electrically.

Preferably, the electric generating multiplex controlling method comprises:

The three-phase output in the starting winding provides the direct currency to the high-voltage power source/battery charging and/or load electricity through high-voltage rectifier chopper regulating circuit.

The three-phase output in the motor assistant winding provides the direct currency to the low-voltage power source/battery charging and/or load electricity through high-voltage rectifier chopper regulating circuit.

The three-phase output in the motor assistant winding provides the direct currency to the high-voltage power source/battery charging and/or load electricity through high-voltage rectifier chopper regulating circuit.

The three-phase output in the starting winding provides the direct currency to the low-voltage power source/battery charging and/or load electricity through high-voltage rectifier chopper regulating circuit.

Besides, when the direct voltage of the high-voltage rectifier chopper regulating circuit is lower than the charging voltage in the high-voltage power/battery , it can increase the generating winding; the generating winding connects in-phase with the starting winding and the power-assist winding, or it is designed as the independent winding in-phase with the starting winding and power-assist winding, and the three-phase output of the generating winding will provide the direct currency to the high-voltage power/battery charging /load electricity after the high-voltage rectifier chopper regulating circuit.

To achieve the other aim of the invention, the third tech scheme is to provide a electromotion mixed dynamic vehicle. The mobile adopts to the electric generating multiplex controlling system and method to exchange the working status between the low-speed starting and high-speed electric power-assist vehicle.

To the vehicle above, it comprises CAN (controller area network) bus and the motor chip with the CAN bus function; The motor chip connects with the ECU(engine control unit) via CAN bus, being used to deal with the working status information collecting from the starting winding /motor assistant winding, high-voltage/low-voltage rectifier chopper regulating circuit ,the magneto electric switch, as well as the working status information collecting by the ECU. And , the motor chip will feedback the treated information to achieve the function , like the motor drive controller to achieve non-stop , speeding electric power-assist, continuous torque controllable electric power-assist, decelerating energy feedback.

And the working status information comprises the phase in motor rotator , speed, voltage, currency, output voltage, "A" voltage sample, "W" output speed pulse, and the switching status in the starting winding /motor assistant winding; the working status in the whole vehicle comprises: the rotating speed, the temperature of cold water, the output torque, the location of throttle, speed, the warm air in air-controlling, etc.

To the hybrid vehicle, it can control the on and off of the starting winding /motor assistant winding via the conductor in the throttle of engine or the electric throttle.

One advantage of the invention is: because of the adopting to the starting and electric power-assist double winding and the switch controlling tech, it does not need the weak magnetic controlling to achieve low-speed and high torque starting and high-speed and high torque electric power-assist working status, which makes a high efficiency, high torque and easy to handle in the controlling system.

Another advantage lies in: it adopts to the magneto electric switch tech in exchanging working status between the starting and the electric power-assist , when the generator starts to the rating speed, the switch can exchange into the high-speed electric power-assist status automatically, and cut down the three-phase output in the back electromotive power-assist; It can make the system and method above avoids the back electromotive power-assist generating in the starting winding of the current low-voltage electric/generating multiplex controlling tech, which can cause damage to the heavy-current MOSFET tube or model device.

The third advantage lies in: it can solve the power-supply problem of two batteries and loading electricity via connecting the three-phase output in the starting winding and motor assistant winding with the low-voltage rectifier chopper regulating circuit.

In all, the controlling method and its system above provides a liable tech base for the industrialization of the "energy-saving", "environmental protection" electromotion mixed dynamic vehicle.

### DISCRIPTION OF THE DRAWINGS

Fig. 1 shows a block diagram of the electric generating multiplex controlling system;
Fig. 2 shows a connecting schematic diagram between the controlling system and the ECU in the mobile;
Fig. 3 shows the electric diagram of the first operating case in the controlling System;
Fig. 4 shows the electric diagram of the second operating case in the controlling system;
Fig. 5 shows the structural diagram of the outer shell in the motor drive controller of the controlling system.

### DETAILED DESCRIPTION OF THE PREFERRED EMBODIMENT

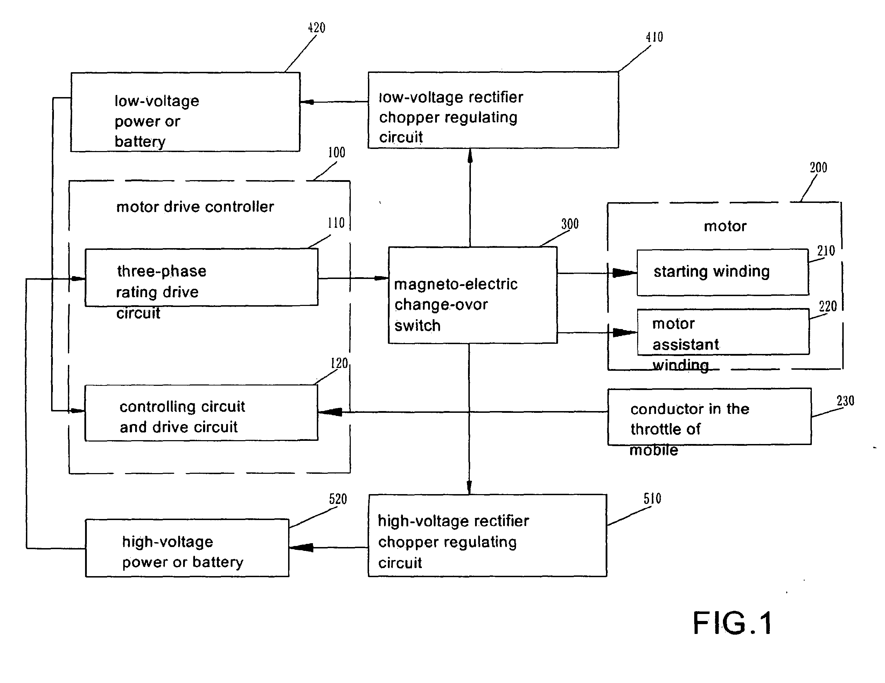

As showed in Fig. 1, the controlling system comprises the motor drive controller (100), the motor (200), the magneto electric switch (300); and the motor drive controller (100) comprises the controlling circuit and the drive circuit (120), three-phase rating drive circuit (110), motor (200) comprises the starting winding (210) and motor assistant winding (220). Among them, the motor drive controller (100) is the trapezoid wave or sine wave motor drive controller; the motor (200) is permanent magnetic brushless synchronous motor, and the starting winding (210) and the motor assistant winding (220) is made from the winding in one permanent brushless synchronous motor designed as the star or angular trapezoid wave or sine wave, or from two independent permanent brushless synchronous motors; And, the output connection of the starting winding (210) and motor assistant winding (220) connect separately with the contacts in the magneto electric switch (300), the three-phrase output of the motor drive controller (100) separately connect with the dynamic contacts in the switch (300); While the position-velocity sensor in the motor (200) is used to provide the relative location and speed information of the rotator the permanent brushless synchronous motor for the motor drive controller.

The method applys the controlling system to carry on the electric generating multiplex controlling is: when connect the starting winding (210) with the motor drive controller (100) via magneto electric switch, the motor drive controller (100) will run the generator; When the generator runs to the rating speed, the low-speed high torque will finish, and the switch (300) will switch automatically, which will cut the starting winding of the motor (200) from the motor drive controller (100), also connect the motor assistant winding (220) in the motor (200) with the electric controller (110) to reach the high-speed high torque electric power-assist.

The controlling tech of double winding and magneto electric switch not only solve the problem of low-speed the high torque starting and high-speed the torque electric power-assist, but also solve the problem of back electromotive power-assist, which is higher than the normal working voltage in the rating device: when the mobile goes into the normal operation, it will cut the electric starting winding in the higher back electromotive power-assist from the motor drive controller, at the same time, it can connect the motor assistant winding in the low back electromotive power-assist with the motor drive controller; thus when finishing the exchanging the working status between the starting and electric power-assist, it also finishes the exchanging of the protection of over-voltage in back electromotive power-assist.

Besides, as showed in Fig. 1, the electric generating multiplex controlling system also comprises the high-voltage rectifier chopper regulating circuit(510), high-voltage power or battery (520), low-voltage rectifier chopper regulating circuit(410), low-voltage power or battery(420); In the practical operation, the three-phrase input in the high-voltage rectifier chopper regulating circuit connects with the three-phrase output in the generating winding , which is used to exchange the three-phase exchanging voltage in starting winding (210) into the direct currency to provide for the high voltage or battery (520) as charging; The three-phrase input of the low-voltage rectifier chopper regulating circuit (410) connects with the motor assistant winding (220) or the three-phrase output of the starting winding ream (210), which is used to exchange the three-phase exchanging voltage in starting winding (210) into the direct currency to provide the low voltage or battery.

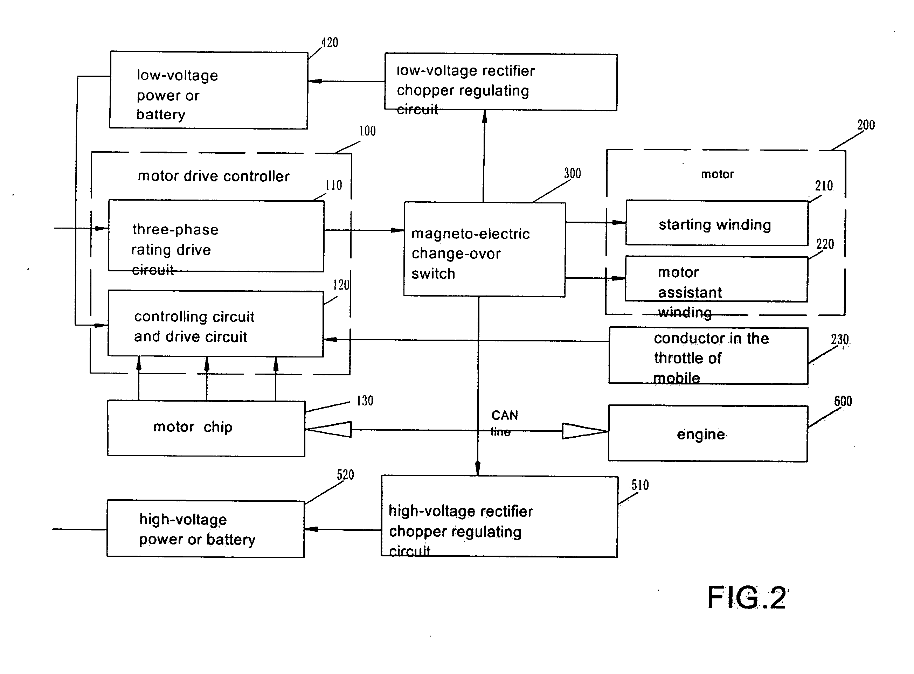

As showed in Fig. 2, the controlling system of the electromotion mixed dynamic vehicle has the structure as shown in Fig. 1; besides ,the mobile in this invention has the function of whole vehicle controlling, that is adopting to the motor chip (130) with the CAN function, using the integrated control composed of motor drive controller (100), high-low voltage rectifier chopper regulating circuit (410, 510), and the ECU (600); among it ,the motor drive controller (100) as showed in Fig. 2 and the one in Fig. 1 comprises the controlling circuit and drive circuit (120), as well as the three-phrase rating drive circuit (110).

During the practical circuit operation: the motor chip (130) with CAN function can realize the motor drive controller (100), which will integrate the electric control , electric voltage-regulating, controlling software and circuit in the whole vehicle into the circuit in the motor drive controller (100); connect the motor chip (130) as the lower machine with the ECU (600) as the upper machine ,and integrate the motor drive, generation , operation into the communicative control.

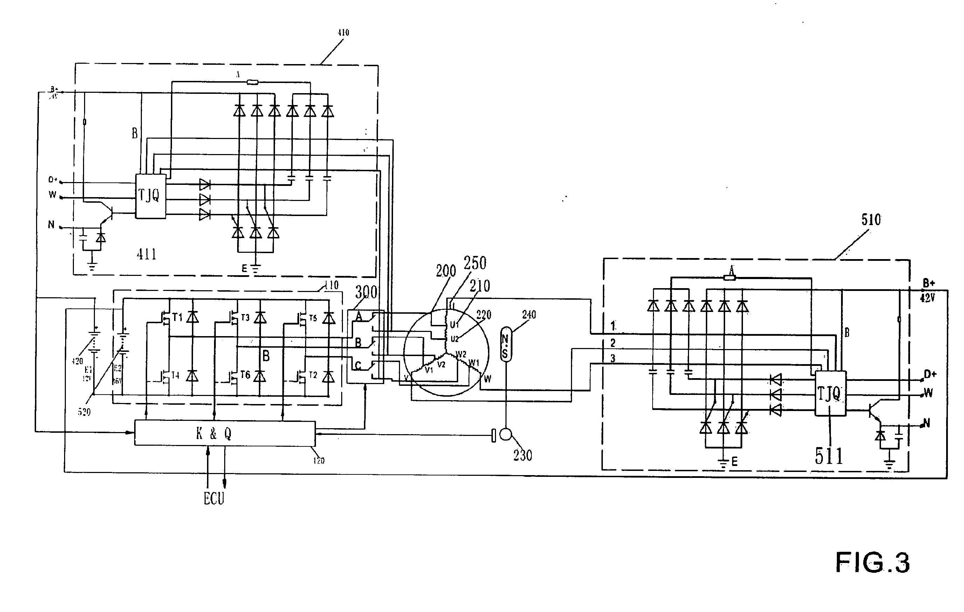

As showed in Fig. 3, in this invention, the first case of dynamo-electric multiplex system adopts: one permanent brushless synchronous motor drive controller, the controller is composed of controlling circuit, drive circuit (120), and three-phrase rating drive circuit (110); one star permanent brushless synchronous motor (200) connecting with many contacts, this motor (200) comprises starting winding (210) U1, V1, W1 and the motor assistant winding (220) U2, V2, W2; one of three-phrase heavy-current double magneto electric switch (300); one 14V low-voltage rectifier chopper regulating circuit (410) and one 42V high-voltage rectifier chopper regulating circuit (510).

The detailed is as followings: the system adopts to one of low-voltage 12V battery (420) and one of high-voltage battery (520), which is composed of MOSFET drive model by the rating tube T1, T2, T3, T4, T5, T6, that is three-phrase rating drive circuit (110); the positive of the high voltage battery (520) connects the positive input of the MOSFET model. The A, B, C output in the three-phrase MOSFET drive model connects with the U1, V1, W1 in the starting winding (210) or U2, V2, W2 in the motor assistant winding switch (220) via the three-phase heavy-current double magneto electric (300) separately. The position-velocity conductor in the permanent brushless synchronous motor (200) collects the relative position signal and speed-changing signal in the permanent magnetic rotator, and provide for the controlling circuit and drive circuit to achieve the controlling function.

The starting winding (210) U1, V1, W1 in the permanent brushless synchronous motor (200) connects with the three-phrase input in the high voltage rectifier chopper regulating circuit, when the engine is in low speed, if the starting winding (210) can not reach to the charging voltage in the high voltage battery (520), it can design the generating winding (250) U, V, W, which is two-rod output with the U1, V1, W1, and connects with the high voltage rectifier chopper regulating circuit (510), and the output direct currency will provide the high voltage 36V battery (5520) charging and loading electricity.

The electric winding (220) U2, V2, W2 in the permanent brushless synchronous motor (200) connects with the three-phrase input of the low voltage rectifier chopper regulating circuit, and the output direct currency will supply with the low voltage 12V battery (420) charging and loading electricity; or the electric winding (210) U1, V1, W 1 in the permanent brushless synchronous motor (200) connects with the three-phrase input of the low voltage rectifier chopper regulating circuit, and the output direct currency will supply with the low voltage 12V battery (420) charging and loading electricity.

The voltage stabilizer of the rectifier chopper regulating circuit (410, 510) controls the output level of the charging indicating point "D+" and neutral point "N" to reach the terminal function, and the velocity test circuit will rectify and shape the stator conductive exchanging electricity, outputting the pulse signal from "W" terminal. The regulator (411, 511) adopts to the output pulse duty circle controller by voltage, and the stator will gain the voltage from the "B+" armature, regulating the respondent controlling terminal to control the ratio of the controllable silicon working time. If the output voltage is a bit high, the stator will reduce the contacting pulse width, and increase the controllable silicon cutting time, reduce the output voltage; if the voltage is too low, the stator will send out pulse to increase the ratio of controllable silicon time, and the output voltage will increase the output voltage. Thus the rectifier chopper regulating circuit (410, 510) will on the dynamic balance with the stable output voltage of 14V and 42V.

Based on the electric generating multiplex controlling system, it can increase the controlling function, that is to integrate the motor drive controller (110 and 120), high-low voltage rectifier chopper regulating circuit (410, 510), whole vehicle controlling and generator ECU controlling.

And among it: the motor drive controller (110 and 120) adopts to the motor chip with the CAN function, integrating the motor drive controlling, generating voltage-regulating, controlling software and circuit of the whole vehicle into the motor drive controlling circuit; the motor chip will be the lower machine, connecting with the ECU as the upper machine, reaching integrating communicative control via CAN line.

Meanwhile, the motor chip collects the feedback signal of the motor rotator phase, velocity, voltage, currency that motor drive needs; the generation control needs the signal from generating output voltage, "A" sample voltage, "W" output speed-rotating pulse, circuit cutting switch; the vehicle collects signal of the rotating speed, the temperature of cold water, the throttle position, the velocity, the air-conditioning air that the controlling needs. The motor chip will calculate the signals above and control the magneto electric switch signal according to the working status; output signals of motor drive circuit can run, start/stop, regulation; output the signals of generating voltage-regulating circuit; send out the signal of motor ECU when lack of oil or electricity signal.

The starting, electric power-assist and the double-voltage generating output is in the status of closing, when it runs, the high-low voltage rectifier chopper regulating circuit (410, 510) is in the status of non-output status. When the mobile generator does not need electric working status, for example, the mobile is running or decelerating normally, the two rectifier chopper regulating circuit (410, 510) is in the status of output. The mutual working status model can increase the dynamic when mobile is starting or accelerating.

The starting and stop of the motor adopts to the conductor in the throttle of mobile (230) or the electric throttle to control, which can reach the working status of the stop, starting, acceleration power-assist, normal running or deceleration. It is simple and reliable, without adding new switch to the controlling panel in mobile, and at the same time it can realize the mixing control of electric and rule double drives.

So it can achieve the integrated control of exchanging the working status, the normal running, the decelerating generating, the non-stop velocity, and the generating voltage-regulation.

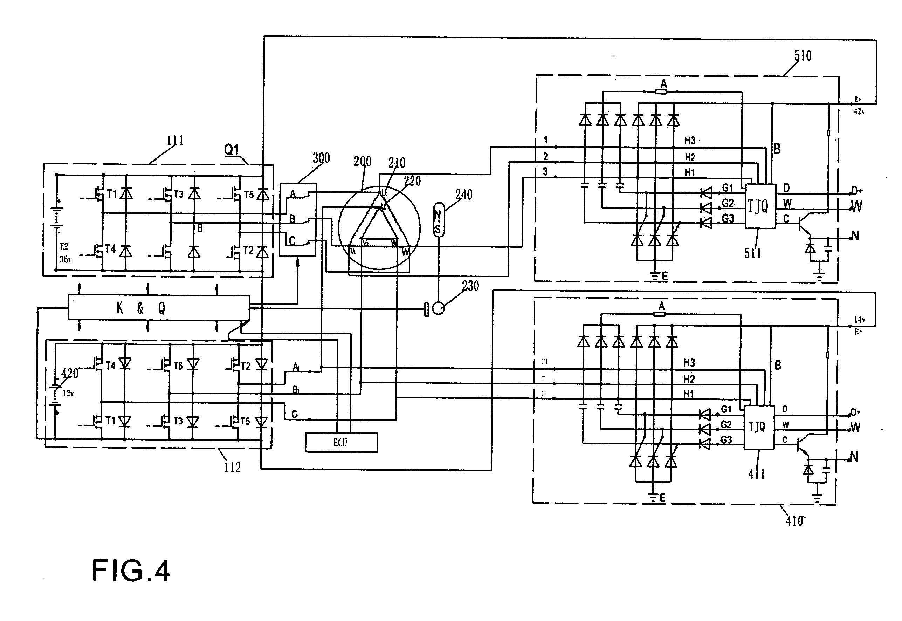

As showed in Fig. 4, in this invention, the second case of dynamo-electric multiplex system adopts: two permanent brushless synchronous motor drive controller (100). It is composed of controlling circuit and drive circuit (120), three-phase rating drive circuit (111, 112); one angular connecting permanent brushless synchronous motor (200), it contains the starting winding (210) U1, V1, W1 and the motor assistant winding (220) U2, V2, W2; a group of three-phase heavy-current unidirectional magneto electric switch (300), a set of 14V low-voltage rectifier chopper regulating circuit (410) and a set of 42V high voltage rectifier chopper regulating circuit (420).

The detail is: the two sets of the three-phase rating MOSFET drive model in this system ,that is three-phase drive circuit (111,112), its positive input terminal connects with the positive of the high voltage battery (520), its negative input connects with the high voltage battery (520); one of three-phase rating MOSFET drive model, that is the three-phase exchanging output terminal A,B,C, of the three-phase rating drive circuit (111), connects with the U1, V1, W 1 in the starting winding (210); the other model, that is the three-phase exchanging output A1, B1, C1 in the three-phase rating drive circuit (112), connects with the U2, V2, W2 in the electric power-assist wining (220). The closing and cutting of the three-phase heavy-current magneto electric switch (300) can achieve the two sets of three-phase rating MOSFET drive model, that is the exchanging control in the three-phase rating drive circuit (111, 112), and then further to complete working status between the transformation of starting and electric power-assist.

The starting winding (210) U1, V1, W1 permanent brushless synchronous motor(200) connects with the three-phase input in the high voltage rectifier chopper regulating circuit (510), the output currency provide with the charging and loading electricity of low voltage 12V battery (420).

The same with the Fig. 3, when the starting winding (210) runs in a low speed, if the output three-phase alternating voltage can not reach the charging voltage in high voltage battery (520), it can add one group of generating winding, which will be the angular independent winding. It can connects with the high voltage rectifier chopper regulating circuit, and the output direct current will provide the charging and load electricity of high voltage battery (520).

The other controlling methods and its system are the same with Fig. 3.

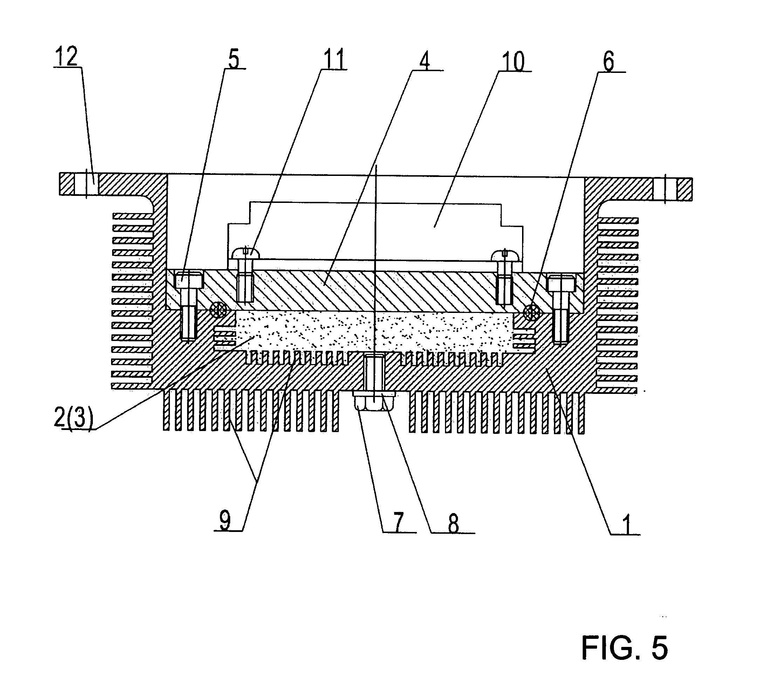

Fig. 5 is structural diagram of the outer shell of the controller, among it: 1-outer shell; 2-effusion groove; 3-heat-dissipating liquid; 4-sealing covering; 5-sealing covering bolt; 6-O-type sealing ring; 7-fuel bolt; 8-sealing pad; 9-heat-dissipating plates; 10-models; 11-model fixing bolt; 12-shell fixing hole.

In the existing tech, normally the drive controller adopts to the heat-dissipation via air-cool or water-cool. In the hybrid with the electric working status, the controller can adopt to the air-cool or water-cool, but in the short time, it has a relative higher cost.

Therefore, the invention particularly designs one simple and practical heat-dissipating shell. There is one effusion groove (2) in the outer shell (1), the effusion groove (2) has the heat-dissipating liquid (3) with high heat, the sealing covering (4) of the heat-dissipating liquid (3) connects with sealing of the outer shell (1), the sealing covering (4) can be the model fixing pad, the model (10) is fixed on the pad (4) of the heat-dissipating liquid covering.

In order to add the heat-dissipating liquid (3) conveniently, the outer shell (1) has one hole in the fuel bolt (7) to connect with the effusion groove (2).

In order to increase the effect of heat-dissipation, there is a heat-dissipating plate (9) in the outside wall of outer shell (1) and the inside wall of the effusion groove. The model (10) is fixed on the covering pad of the heat-dissipating sealing, which can absorb the heat produced by the starting or electric power-assist in short time, it will be absorbed by the heat-dissipating liquid , and the dissipates through the outer shell (1).

What should be mentioned is that, the inventive content and the detailed operation method is to demonstrate the practical application of the invention, but not for the limit of the protection range. The tech stuff can do various modification, exchanging or combination under the spirit and the principle of the invention. The protective range should conform with the requirement.

### INDUSTRIAL APPLICABILITY

The patent protection theme has the system and method of electric generating multiplex control. This system and method is technically feasible through variety of experimental certification, and there are some relative products that has put into production; besides, the stuff in this field should know, another theme which the invention applies for the patent to protect is totally practical, that is the electromotion mixed dynamic vehicle adopting to the electric generating multiplex controlling system and method.

## Claims

1. An electric generating multiplex controlling system, wherein the motor drive controller, including the motor of starting winding and motor assistant winding, and the magneto electric switch used in the working status exchange between the low-speed starting and high-speed electric power-assist;
the output connecting line in the starting winding and the motor assistant winding above connects with the upper and lower contacts in the switch;
the three-phase alternative output of the controller connects with the dynamic point of the switch.

2. According to the controlling system in claim 1, wherein the winding are designed by the winding in one motor via tap or independent method, or by the windings in two motors separately.

3. According to the controlling system in claim 1, wherein its system comprises the generating winding, said generating winding connects in-phase with the starting winding, or the independent winding of the starting winding.

4. According to the controlling system in claim 1 or 3, wherein
its system contains high voltage rectifier chopper regulating circuit and low voltage rectifier chopper regulating circuit;
the three-phase input of the high voltage rectifier chopper regulating circuit connects with the one of the low voltage rectifier chopper regulating circuit, which is used to exchanging the three-phase alternative voltage into the direct voltage ,and then provide for the high voltage power /battery charging /loading electricity;
the three-phase input of the low voltage rectifier chopper regulating circuit connects with the one of the low voltage rectifier chopper regulating circuit, which is used to exchange the three-phase alternative voltage into the direct voltage ,and then provide for the high voltage power /battery charging /loading electricity.

5. According to the controlling system in claim 1 or 2 or 3, wherein the controlling is fixed in the shell with the heat-dissipating liquid: there is effusion groove (2) in the outer shell (1), the effusion groove (2) has the heat-dissipating liquid (3) with high heat, the sealing covering (4) of the heat-dissipating liquid (3) connects with sealing of the outer shell (1), the controller (10) is fixed on the sealing pad (4).

6. According to the controlling system in claim 5, wherein the outer shell (1) has the hole in fuel bolt (7) connecting with the effusion groove (2).

7. According to the controlling system in claim 5, wherein the outside wall in the outer shell (10) has the heat-dissipating plates (9) in the inside wall of the effusion groove (2).

8. An electric generating multiplex controlling method for using the controlling system in claim 1 or 3, wherein the controlling method of the dynamo-electric multiplex comprises:
connecting the starting winding and the motor drive controller via the magnetic electric switch, the controller can drive the motor to run via the starting winding;
after the generator runs to the rated speed, it can cut down the starting winding from the motor drive controller, and connect the motor assistant winding with the electric controller, driving the motor assistant winding to electric power-assist.

9. According to the electric generating multiplex controlling method in claim 8, wherein
the three-phase input of the high voltage rectifier chopper regulating circuit regulate the circuit of the high voltage rectifier chopper regulating circuit, and then provide for the high voltage power /battery charging /loading electricity;
the three-phase input of the low voltage rectifier chopper regulating circuit regulate the circuit of the high voltage rectifier chopper regulating circuit, and then provide for the high voltage power /battery charging /loading electricity.

10. According to the electric generating multiplex controlling method in claim 8 or 9, wherein the windings are designed by the winding in one motor via tap or independent method, or by the winding in two motors separately.

11. A electromotion mixed dynamic vehicle, wherein the mobile comprises the electric generating multiplex controlling system, its controlling system is used to exchange the working status between the low-speed starting and the high-speed electric power-assist mobile;
the controlling system comprises: a motor drive controller, including the motor of starting winding and motor assistant winding, and the magneto electric switch; various output connecting lines in the windings, which is used to connect the upper and lower contacts in the switch; the three-phase alternative output in the controller connects the dynamic contact in the switch separately.
connecting the starting winding and the motor drive controller via the magnetic electric switch, the controller can drive the motor to run via the starting winding;
after the generator runs to the rated speed, it can cut down the starting winding from the motor drive controller, and connect the motor assistant winding with the electric controller, driving the motor assistant winding to electric power-assist.

12. According to the electromotion mixed dynamic vehicle in claim 11, wherein the controlling system in the mobile also comprises the generating winding;
the generating winding connects in-phase with the starting winding, or with the independent winding in the starting winding.

13. According to the electromotion mixed dynamic vehicle in claim 11 or 12, wherein the controlling system of dynamo-electric multiplex contains the high voltage rectifier chopper regulating circuit and low voltage rectifier chopper regulating circuit;
the three-phase input of the high voltage rectifier chopper regulating circuit connects with the one of the low voltage rectifier chopper regulating circuit, which is used to exchanging the three-phase alternative voltage into the direct voltage, and then provide for the high voltage power /battery charging /loading electricity;
the three-phase input of the low voltage rectifier chopper regulating circuit connects with the one of the low voltage rectifier chopper regulating circuit, which is used to exchanging the three-phase alternative voltage into the direct voltage, and then provide for the high voltage power /battery charging /loading electricity.

14. According to the electromotion mixed dynamic vehicle in claim 11 or 12, wherein the mobile as the motor chip with the CAN function, the motor chip connects with the ECU via CAN line;
the motor chip can be used in treating the signals collecting from the starting winding /motor assistant winding, the high/low voltage rectifier chopper regulating, the working status of the switch, as well as the working information of the vehicle collected by the ECU; and feedback the controller signals after handing to the mentioned ECU.

15. According to the electromotion mixed dynamic vehicle in claim 14, wherein
the working status information comprises the rotator position, velocity, voltage, currency, output voltage, "A" sample voltage, "W" output pulse and switch condition in the starting winding /motor assistant winding;
the operative information comprises: the rotating speed in the motor, the temperature of cool-water, the position of the throttle, the velocity, the air in the conditioner.

16. According to the electromotion mixed dynamic vehicle in claim 15, wherein the mobile can control the starting or stop of the starting winding /motor assistant winding via the position conductor in the engine throttle or the electric throttle.
